# EUROPÄISCHE PATENTSCHRIFT

(11) **EP 0 720 944 B1**
(45) Veröffentlichungstag und Bekanntmachung des Hinweises auf die Patenterteilung: **20.08.1997**
(21) Anmeldenummer: 95120315.7
(22) Anmeldetag: 21.12.1995
(51) Int. Cl.: B62D 31/00, B62D 27/06

(54) **Karosserie für einen Personenkraftwagen, insbesondere für einen Kleinwagen**
Body for a passenger vehicle, especially for a small car
Carrosserie pour véhicule automobile, en particulier pour voiture de petites dimensions

(30) Priorität: 06.01.1995 DE 19500361
(43) Veröffentlichungstag der Anmeldung: 10.07.1996
(73) Patentinhaber: MC Micro Compact Car Aktiengesellschaft, 2500 Biel 4 (CH)
(72) Erfinder: Tomforde, Johann, Dipl.-Ing., D-71069 Sindelfingen (DE); Nowak, Werner, Dipl.-Ing., D71069 Sindelfingen (DE); Manske, Jens, D-71263 Weil der Stadt (DE); Berlinger, Walter, D-71069 Sindelfingen (DE)
(74) Vertreter: Pöpel, Friedemann

(56) Entgegenhaltungen:
- EP-A- 0 076 934
- EP-A- 0 233 670
- EP-A- 0 340 180
- EP-A- 0 501 226
- EP-A- 0 547 583
- DE-A- 2 414 157
- DE-B- 1 142 115
- DE-C- 3 425 776
- FR-A- 2 684 950
- AUTOMOTIVE ENGINEERING, Bd. 90, Nr. 2, Februar 1982 DALLAS US, Seiten 95-97, SCOTT 'Hybrid car has bolt-on body elements'
- L'AUTO-JOURNAL, Nr. 14-15, 1.September 1982 PARIS FR, Seite 116

## Beschreibung

Die Erfindung betrifft eine Karosserie für einen Personenkraftwagen, insbesondere für einen Kleinwagen nach dem Oberbegriff von Anspruch 1, wie sie beispielsweise aus der EP 547 583 A1 als bekannt hervorgeht.

Üblicherweise sind bei einem Personenkraftwagen die Außenhautteile in die tragende Rahmenstruktur der Karosserie unlösbar integriert, so daß eine Änderung der Außenhaut in maßlicher oder formaler Hinsicht nicht ohne grundlegende Änderung auch der Rahmenstruktur möglich ist. Veröffentlichungen auf diesem Gebiet befassen sich vor allem mit der Gestaltung der Rahmenstruktur, ohne näher darauf einnzugehen, wie und wo Außenhautteile mit der Rahmenstruktur verbunden sind. Erwähnt seien in diesem Zusammenhang beispielsweise die DE 31 19 666 A1, die DE 30 08 840 C2 oder die DE 23 36 213 C2. Wenn es auch dort nicht ausdrücklich erwähnt ist, so darf für den zitierten Stand der Technik doch unterstellt werden, daß die Außenhautteile der Karosserie weitgehend fester und integraler und vor allem mittragender Bestandteil der Rahmenstruktur sind.

Die eingangs bereits erwähnte, zur Gattungsbildung herangezogene EP 547 583 A1 zeigt die Tragstruktur der Karosserie eines Kleinfahrzeuges. Der entscheidende Gedanke bei diesem Dokument zum Stand der Technik besteht in einem dreiteiligen Aufbau der Tragstruktur der Fahrzeugkarosserie. Und zwar besteht sie aus einem wannenförmigen Bodenelement, welches mit integrierten Längs- und Querträgern versteift ist und Ansätze für die vertikalen Tragsäulen der Karosserie aufweist. Dieses Bodenelement seinerseits besteht aus einer Aluminium-Gußkonstruktion oder aus einer durch entsprechend geformte Bleche gebildeten Kastenkonstruktion. Ein weiteres Tragelement, welches mit dem wannenförmigen Bodenelement an geeigneten Knotenstellen dauerhaft verbunden wird, ist ein nach unten und nach hinten offenes, käfigartiges Raumelement, welches den Insassenraum nach oben umgreift. Ein drittes Element besteht aus einer Schalenkonstruktion, die den rückwärtigen Teil der Karosserie bildet. Mit dieser rückwärtigen Schalenkonstruktion können - je nach Gestaltung dieses Elementes - bauliche Varianten des Fahrzeuges gebildet werden. Die Art der Außenhautbeplankung der Karosserie ist hier nicht näher erwähnt.

Eine Veröffentlichung in 372 Automotive Engineering, Volume 90 (1982), Nr. 2 (Februar), Dallas, Texas, USA beschreibt auf den Seiten 95 bis 97 unter dem Titel "Hybrid car has bolt-on body elements" ein Prototyp-Fahrzeug mit einem Stahl-Skelett-Rahmen und aufgesetzten und angeschraubten Kunststoff-Außenhautteilen. Die Außenhautteile überdecken jedoch vollständig den Stahl-Skelett-Rahmen, so daß dieser zwischen den Verkleidungsteilen nicht sichtbar ist.

Die EP 501 226 A1 schlägt für die Bildung von Aluminium-Skelett-Rahmen aus Strangpreßprofilen vor, die einzelnen Hohlprofile aus zwei sich zu einem geschlossenen Vollprofil ergänzenden offenen Profilteilen zu bilden, die jeweils in ihrer Wandstärke entsprechend den Belastungen der Rahmenschenkel bemessen sind. Die Art der Beplankung des Skelettrahmens bleibt auch hier völlig offen.

Die DE 34 25 776 C2 zeigt eine Fahrzeugtür, bei der die Außenseite der Tür horizontal zweigeteilt ist und beide Außenteile lösbar mit dem tragenden Rahmen der Fahrzeugtür lösbar verbunden sind. Diese Art der Türgestaltung ist mit Rücksicht auf eine leichtere Austauschbarkeit der Außenteile im Falle einer Reparaturbedürftigkeit gewählt worden. Bei der Fahrzeugtür nach der DE 36 08 506 C2 ist das Türaußenblatt ebenfalls lösbar mit der Tragstruktur der Fahrzeugtür verbunden, allerdings aus einem anderen Grund. Und zwar soll dort unabhängig von einer etwaigen dejustierten Position der Tragstruktur der Fahrzeugtür das Türaußenblatt oberflächenbündig und randäquidistant in den entsprechenden Karosserieausschnitt für die Fahrzeugtür einjustiert werden können, was eine relativ komplizierte, justierbare Halterung des Türaußenblattes an der Tragstruktur der Tür erfordert.

Ausgehend von dem gewürdigten Stand der Technik ist es Aufgabe der Erfindung, ein Konzept für eine Karosserie aufzuzeigen, durch welches ein danach hergestelltes Fahrzeug nicht nur insgesamt bezüglich kleinerer Karosserieschäden sehr reparaturfreundlich ist, sondern daß auch in einfacher Weise maßliche und formale Karosserie-Alternativen produziert und angeboten werden können.

Diese Aufgabe wird - ausgehend von dem gewürdigten Stand der Technik - erfindungsgemäß durch die Gesamtheit der Merkmale von Anspruch 1 gelöst. Danach sind die Verkleiungsteile der Karosserie insbesondere unterhalb der Gürtellinie, die das Erscheinungsbild des Kleinwagens im wesentlichen bestimmen, lösbar und leicht austauschbar am Fahrzeug bzw. an der Fachwerkkonstruktion befestigt, wogegen die oberhalb der Gürtellinie verlaufenden Profilstäbe der Fachwerkkonstruktion jeweils mit ihrer nach außen weisenden Flachseite freiliegen und in diesem Bereich jeweils entsprechend dem gewünschten Oberflächenverlauf der Karosserie geformt sind; sie bilden - abgesehen von einer Lackierung - unmittelbar Karosserieoberfläche.

Die mit der Erfindung erzielbaren Vorteile liegen in Folgendem:
▷ Im Fall von Bagatellschäden können die Verkleidungsteile sehr einfach und rasch erneuert oder repariert werden.
▷ Es kann ohne großen Zeit- und Kostenaufwand das gesamte Fahrzeug-"Kleid" nicht nur in farblicher Hinsicht, sondern auch hinsichtlich der Formgebung ausgetauscht und so das Erscheinungsbild auch an einem gebrauchten Fahrzeug erneuert oder modernisiert werden.
▷ Auch innerhalb des Stadiums der Neuentwicklung eines Fahrzeuges braucht das Außenkleid des Fahrzeuges bezüglich seiner endgültigen Formgebung erst zu einem sehr späten Zeitpunkt festgelegt zu werden.
▷ Es können ohne besonderen Kostenaufwand Modeilvarianten bezüglich des Fahrzeugkleides für einen Grundtyp eines Fahrzeuges angeboten werden.
▷ Es können Kundenwünsche bezüglich eines bestimmten georderten Fahrzeuges noch in einem sehr späten Stadium kurz vor Fertigstellung des betreffenden Fahrzeuges, im Extremfall sogar noch am Fertigstellungstag, berücksichtigt werden.
▷ Der Fahrzeughersteller kann sehr flexibel auf Wünsche des Marktes reagieren, indem er für ein serienmäßig produziertes Fahrzeug immer wieder neue Karosserieformen in einer kleinen Testserie am Markt anbietet und die Nachfrage des Marktes darauf abwartet.
▷ Die Möglichkeit der relativ problemlosen und kostengünstigen Austauschbarkeit des Karosserie-"Kleides" kann auch unabhängig von Gesichtspunkten der Reparaturfreundlichkeit einen Kundennutzen zumindest für diejenigen Kunden darstellen, die sich gelegentlich ein anderes "Kleid" für ihr Fahrzeug wünschen.

Zweckmäßige Ausgestaltungen der Erfindung können den Unteransprüchen entnommen werden; im übrigen ist die Erfindung anhand zweier in der Zeichnung dargestellten Ausführungsbeispiele nachfolgend noch erläutert; dabei zeigen:
- Fig. 1: eine perspektivische Einzeldarstellung einer Fachwerkkonstruktion für ein erstes Ausführungsbeispiel eines Kleinwagens,
- Fig. 2: eine perspektivische Darstellung der vollständigen daraus erstellten Karosserie des Kleinwagens und
- Fig. 3: ein weiteres Ausführungsbeispiel der Karosserie eines Kleinwagens, bei dem der austauschbare Umfang des Karosseriekleides geringer als beim Beispiel nach Figur 1 und 2 ist.

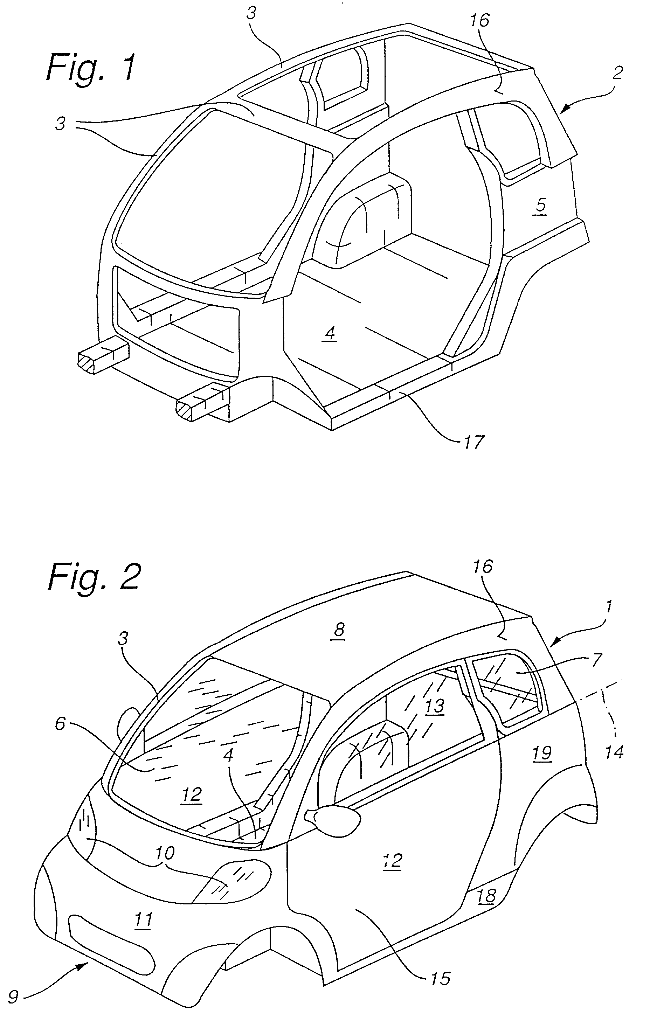

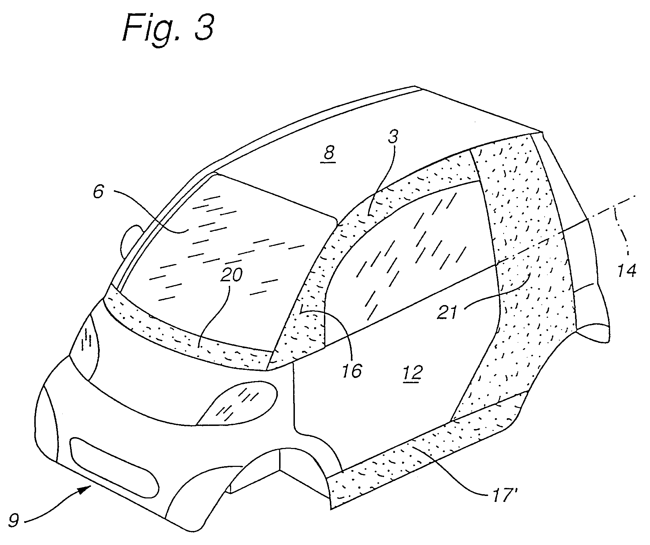

Die in Fig. 2 dargestellte Karosserie 1 ist vorzugsweise für einen Kleinwagen konzipiert. Die tragende Struktur der Karosserie ist gemäß Fig. 1 als sog. Space-frame-Konstruktion gebildet, d.h. sie ist durch eine räumliche Fachwerkkonstruktion 2 gebildet, die aus Profilstäben 3 (im Beispiel nach Figur 3 aus Profilstäben 3, 20 und 21) zusammengesetzt ist, die ihrerseits über Verbindungsknoten miteinander verbunden sind. Nur zum Teil sind die Felder zwischen den Fachwerkstäben 3, und zwar im Bodenbereich und in dem hinter den Türen liegenden Seitenbereich, durch in die Fachwerkkonstruktion unlösbar integrierten und dichtend an die Fachwerkstäbe angeschlossenen Flächenelemente, nämlich durch einen Boden 4 sowie durch je ein rechtes bzw. linkes Seitenwandteil 5 geschlossen. Im Bereich der Windschutzscheibe 6 sowie von festen Seitenfenstern 7 hinter den Seitentüren 12 sind die offenen Felder durch dichtend eingesetzte Fensterscheiben 6 bzw. 7 geschlossen. In soweit ist die Karosserieform bzw. das Aussehen der Karosserie durch die Fachwerkkonstruktion festgelegt und - nach Abschluß der Fahrzeugentwicklung und Festlegung der Produktionseinrichtungen - wenig variabel. Auch im Dachbereich ist, zumindest was die Dachform anlangt, nur ein relativ geringer Gestaltungsspielraum für Varianten vorgesehen, zumal aufgrund des - beim Ausführungsbeispiel nach Figur 2 - dichtend eingesetzten festen Daches 8 eine Austauschbarkeit nur mit größerem Montageaufwand möglich erscheint. Allerdings ist hier ein Bagatellschaden auch weniger zu erwarten und der Dachbereich prägt auch weniger das Erscheinungsbild eines Kleinwagens als etwa die Seitenpartien. Jedoch ist unter funktionellen Aspekten, je nach Kundenwunsch, ohne weiteres anstelle des Festdaches 8, welches - nebenbei bemerkt - aus einem undurchsichtigen Werkstoff z.B. aus Blech oder aus einem durchsichtigen Werkstoff, z.B. aus einem Kunststoff bestehen kann, auch eine andere Dachkonstruktion dichtend eingesetzbar, beispielsweise ein Lamellendach oder ein Faltdach. Das erfindungsgemäße Karosseriekonzept ist also auch bezüglich des Daches variabel und läßt auch zu einem relativ späten Entstehungszeitpunkt eines individuellen Kundenfahrzeuges noch Änderungswünsche zu.

Das offene Feld der Fachwerkkonstruktion im Frontbereich ist durch ein dichtend anschraubbares, funktionsfertig vormontierbares Bug-Modul 9 geschlossen, welches rechts und links zwar die Front-Leuchteinheiten 10, jedoch keine unmittelbar integrierte Verkleidung enthält.

Die oberhalb der Fensterunterkante 14 - nachfolgend "Gürtellinie" genannt - verlaufenden Profilstäbe 3 der Fachwerkkonstruktion 2 liegen jeweils mit ihrer nach außen weisenden Flachseite 16 frei, sind in diesem Bereich jeweils entsprechend dem gewünschten Oberflächenverlauf der Karosserie 1 geformt und bilden - abgesehen von einer Lackierung - unmittelbar Karosserieoberfläche.

Um das Fahrzeug nicht nur insgesamt bezüglich kleinerer Karosserieschäden sehr reparaturfreundlich zu gestalten, sondern um auch in einfacher Weise maßliche und formale Karosserie-Alternativen produzieren und anbieten zu können, sind die Verkleiungsteile der Karosserie unterhalb der Gürtellinie 14, die das Erscheinungsbild des Kleinwagens im wesentlichen bestimmen, lösbar und leicht austauschbar am Fahrzeug bzw. an der Fachwerkkonstruktion befestigt.

Zu diesem Zweck ist unterhalb der Gürtellinie 14 die Fachwerkkonstruktion 2 mit Verkleidungsteilen 18, 19 ohne Tragfunktion, die lösbar und austauschbar mit der Fachwerkkonstruktion 2 verbundenen sind, verkleidet, die in diesem unteren Bereich gemeinsam mit den Türaußenblättern 15, der Klappenaußenwand und mit dem Verkleidungsteil 11 des Bug-Moduls 9 die Karosserieform bestimmen. Auch das Bug-Modul ist mit einem die Front-Leuchteinheiten aussparenden Verkleidungsteil 11 überkleidet, welches lösbar und austauschbar mit dem Bug-Modul verbunden ist.

Die seitlich offenen Felder für den Ein- und Ausstieg bzw. hinten für das Be- und Entladen sind jeweils in üblicher Weise durch eine dichtend eingepaßte Seitentür 12 bzw. durch eine Heckklappe 13 verschließbar. Die Seitentüren bzw. die Heckklapp weisen jeweils eine tragenden Türkonstruktion bzw. Klappenkonstruktion auf, in der die gewohnten Tür- bzw. Klappeneinbauten aufgenommen und funktionsfertig vormontiert sind. In diesem Zusammenhang können bei den Türen das Hubfenster, die Schließanlage und die Innentürverkleidung genannt werden. Bei der Heckklappe ist das Rückfenster, eine Scheibenwaschanlage, eventuell die Nummernschildbeleuchtung und die Elektrik für die Heckleuchten zu nennen. Die genannten Tür- bzw. Klappenkonstruktionen weisen jedoch kein fest integriertes Türaußenblatt 15 bzw. keine Klappenaußenwand auf. Vielmehr wird ein zu den Fahrzeugtüren bzw. der Heckklappe jeweils gehöriges, auf den Bereich unterhalb der Fensterunterkante 14 beschränktes Türaußenblatt 15 bzw. eine Klappenaußenwand nachträglich lösbar und austauschbar an die tragende und mit anderen Funktionsteilen vormontierte Türkonstruktion bzw. Klappenkonstruktion anmontiert.

Die Fachwerkkonstruktion 2 ist mit einer im Vergleich zur Lackierung der Verkleidungsteile andersartigen, d.h. andere Applikationsverfahren erfordernden Lackierung beschichtet. Diese haben je nach gewählter Beschichtungsart u.U. den Vorteil eines geringen Lack-Oversprays und einer hohen Auftragsrate in einem einzigen Applikationsschritt, so daß geringe Lackierungskosten erreicht werden können. Außerdem können neue optische Effekte für den Fachwerkrahmen erzielt werden. Da - soweit die Oberflächenteile der Fachwerkkonstruktion am fertigen Fahrzeug unmittelbar freiliegen - diese Oberflächenteile flächenmäßig nur relativ klein sind und das Erscheinungsbild des Fahrzeuges nur zu einem geringen Teil bestimmen, kann sowohl für die gesamte Fachwerkkonstruktion als auch für die innen und außen sichtbare Tragkonstruktion der Seitentüren und der Heckklappe eine optisch geringeren Ansprüchen genügende Lackierung zugelassen werden, ohne daß dadurch das Erscheinungsbild des Fahrzeuges leidet. Vor allem kann für die Fachwerkkonstruktion 2 - im Gegensatz zur Lackierung der Verkleidungsteile 11, 15, 18, 19 - farblich eine für alle unterschiedlichen Fahrzeugfarbgebungen einheitliche Lackierung zugelassen werden. Denkbar ist es, hier nur wenige unterschiedliche Grundtöne zu verwenden. Die Fachwerkkonstruktion kann - im Gegensatz zur Lackierung der Verkleidungsteile - mit einer oberflächlich strukturierten und/oder farblich gesprenkelten Lackierung beschichtet sein. Diese Lackierung ist zweckmäßigerweise in ihrer oberflächlichen Strukturierung und/oder in ihrer farblichen Sprenkelung grober gestaltet, als etwaige Oberflächenfehler und/oder Bearbeitungsspuren an den unlackierten Profilstäben 3 der Fachwerkkonstruktion 2, so daß diese - bis auf sehr grobe, auszubessernde Ausnahmen - damit ohne Vorbehandlung wirkungsvoll überdeckt werden können.

Für die Verkleidungsteile 11, 15, 18, 19, die im wesentlichen das Erscheinungsbild des Fahrzeuges bestimmen, ist eine optisch anspruchsvollere Lackierung vorgesehen. Mit Rücksicht auf den erst sehr spät erfolgenden Einbau der Verkleidungsteile in ein entstehendes Fahrzeug können diese Verkleidungsteile im wesentlichen in horizontaler Flachlage lackiert werden, was ebenfalls den Applikationsprozeß vereinfacht, verkürzt (größere Schichtdicke je Applikationsschritt) und ökologisch verbessert (weniger Overspray).

Rahmenteile, die aus bestimmten Gründen frei liegen oder frei liegen sollen aber aus stilistischen Gründen gleichwohl in Wagenfarbe gehalten sein sollen, können mit einer lösbaren Verblendung überdeckt werden. Beispielsweise können die Seitenschweller 17, also die unterhalb der Seitentüren 12 verlaufenden Bodenlängsträger, auch bei geschlossenen Seitentüren 12 freiliegen. In diesem Fall werden sie mit einem in Wagenfarbe gehaltenen, nicht-tragenden Verkleidungsteil 18 überkleidet, welches lösbar und austauschbar mit dem jeweiligen Seitenschweller 17 verbunden ist. Stattdessen ist es aber u.U. auch denkbar, die Seitenschweller 17 bei geschlossenen Fahrzeugtüren 12 sowie Teil 19 unmittelbar frei liegen zu lassen (vgl. Figur 3) und sie farblich in dem Grundton der Fachwerkkonstruktion zu belassen.

In diesem Fall ist es zu empfehlen, die nach außen weisenden Oberfläche des Schwellers entsprechend dem gewünschten Oberflächenverlauf der Karosserie 1, 3 formlich zu gestalten, so daß sie - abgesehen von der Lackierung - unmittelbar Karosserleoberfläche bilden kann.

Bei dem in Figur 3 gezeigten Ausführungsbeispiel einer Kleinwagenkarosserie sind die austauschbaren Umfänge des Karosseriekleides - in Figur 3 weiß dargestellt - geringer als beim Beispiel nach Figur 1 und 2. Das bedeutet zugleich, daß diejenigen Anteile der Fachwerkkonstruktion, die jeweils mit ihrer nach außen weisenden Flachseite freiliegen und in diesem Bereich jeweils entsprechend dem gewünschten Oberflächenverlauf der Karosserie geformt sind und unmittelbar Karosserieoberfläche bilden, größer sind als bei der Karosserie nach Figur 2. Diese äußerlich sichtbaren Rahmenteile sind in Figur 3 gesprenkelt dargestelt. Außer den Dachrahmenträgern sind diese sichtbaren Rahmenteile der Schweller 17' unterhalb der Fahrzeugtüren 12, der Profilstab 20 unterhalb der Windschutzscheibe 6 sowie der vertikale, breite Profilstab für die B-Säule hinter der Seitentür. Die B-Säule bildet zwar über die ganze Vertikalerstreckung sichtbare Karosseriefläche, aber zumindest im unteren Teil ist sie partiell, und zwar im hinteren Bereich, mit einem austauschbaren Blech überkleidet. Der oberhalb der Gürtellinie 14 aber hinter dem Profilstab 21 liegende Bereich kann in einer denkbaren Variante offen und durch eine Panorama-Heckscheibe geschlossen sein, die sich bis in den Seitenbereich erstreckt. In einer anderen denkbaren Ausführung kann der angesprochene obere Bereich der B-Säule durch eine größere Breitenerstreckung der B-Säule auch oberhalb der Gürtellinie geschlossen und dort mit einem austauschbar befestigten Blechteil überkleidet sein.

## Patentansprüche

1. Karosserie (1) für einen Personenkraftwagen, insbesondere einen Kleinwagen, bei der die tragende Struktur der Karosserie (1) durch eine räumliche Fachwerkkonstruktion (2) aus über Verbindungsknoten zusammengesetzten Profilstäben (3) als sogenannte Space-frame-Konstruktion gebildet ist, wobei
die Felder zwischen den Profilstäben (3) im Bodenbereich und in dem hinter den Seitentüren liegenden Seitenbereich durch in die Fachwerkkonstruktion unlösbar integrierte und dichtend an die Fachwerkstäbe angeschlossene Flächenelemente (4, 5) geschlossen sind,
die offenen Felder der Fachwerkkonstruktion im Bereich der Windschutzscheibe (6) sowie von festen Seitenfenstern (7) hinter den Seitentüren (12) und im Bereich des Daches (8) durch dichtend eingesetzte Fensterscheiben (6, 7) beziehungsweise durch ein dichtend eingesetztes Dach (8) geschlossen sind,
die offenen Felder der Fachwerkkonstruktion (2) im Frontbereich durch ein dichtend anschraubbares, funktionsfertig vormontierbares Bug-Modul (9) geschlossen sind, welches rechts und links auch die Front-Leuchteinheiten (10) enthält, wobei das Bug-Modul (9) mit einem die Front-Leuchteinheiten (10) aussparenden Verkleidungsteil (11) überkleidet ist, und
die offenen Felder der Fachwerkkonstruktion (2) im Bereich der Seitentüren (12) und einer Heckklappe (13) durch jeweils eine dichtend eingepaßte Seitenfür (12) beziehungsweise eine Heckklappe (13) verschließbar sind, welche Seitentüren (12) beziehungsweise Heckklappe (13) jeweils ein auf den Bereich unterhalb der Fensterunterkante (14) beschränktes Türaußenblatt (15) beziehungsweise eine Klappenaußenwand aufweist, **dadurch gekennzeichnet**, daß
zumindest die oberhalb der Fensterunterkante (14) verlaufenden Profilstäbe (3) der Fachwerkkonstruktion (2) oder zumindest der oberhalb der Fensterunterkante (14) sich erstreckende Bereich einzelner Profilstäbe (3) der Fachwerkkonstruktion (2) jeweils mit ihrer nach außen weisenden Flachseite (16) frei liegen, in diesem Bereich jeweils entsprechend dem gewünschten Oberflächenverlauf der Karosserie (1) geformt sind und abgesehen von einer Lackierung unmittelbar Karosserieoberfläche bilden, daß
das das Bug-Modul (9) überkleidende, die Front-Leuchteinheiten (10) aussparende Verkleidungsteil (11) lösbar und austauschbar mit dem Bug-Modul (9) verbunden ist, daß
die zu den Seitentüren (12) beziehungsweise zu der Heckklappe (13) gehörigen, auf den Bereich unterhalb der Fensterunterkante (14) beschränkten Türaußenblätter (15) beziehungsweise die Klappenaußenwand ebenfalls jeweils lösbar und austauschbar mit der tragenden Tür- beziehungsweise Klappenkonstruktion verbunden sind, und daß
unterhalb der Fensterunterkante (14) die Fachwerkkonstruktion (2) mit Verkleidungsteilen (18, 19) ohne Tragfunktion, die lösbar und austauschbar mit der Fachwerkkonstruktion (2) verbundenen sind, verkleidet ist, die in diesem unteren Bereich gemeinsam mit den Türaußenblättern (15), der Klappenaußenwand und mit dem Verkleidungsteil (11) des Bug-Moduls (9) die Karosserieform bestimmen.

2. Karosserie nach Anspruch 1,
**dadurch gekennzeichnet**,
daß die Fachwerkkonstruktion (2) mit einer im Vergleich zur Lackierung der Verkleidungsteile (11, 15, 18, 19) andere Applikationsverfahren erfordernden Lackierung beschichtet ist.

3. Karosserie nach Anspruch 1,
**dadurch gekennzeichnet**,
daß die Fachwerkkonstruktion (2) - im Gegensatz zur Lackierung der Verkleidungsteile (11, 15, 18, 19) - mit einer Alternativlackierung beschichtet ist.

4. Karosserie nach Anspruch 1,
**dadurch gekennzeichnet**,
daß die Fachwerkkonstruktion (2) - im Gegensatz zur Lackierung der Verkleidungsteile (11, 15, 18, 19) - mit einer oberflächlich strukturierten und/oder farblich gesprenkelten Lackierung beschichtet ist.

5. Karosserie nach Anspruch 1,
**dadurch gekennzeichnet**,
daß die Lackierung der Fachwerkkonstruktion (2) in ihrer oberflächlichen Strukturierung und/oder in ihrer farblichen Sprenkelung grober gestaltet ist, als etwaige Oberflächenfehler und/oder Bearbeitungsspuren an den unlackierten Profilstäben (3) der Fachwerkkonstruktion (2).

6. Karosserie nach Anspruch 1,
**dadurch gekennzeichnet**,
daß die Seitenschweller (17), also die unterhalb der Seitentüren (12) verlaufenden Bodenlängsträger, von den geschlossenen Seitentüren (12) nicht überdeckt, jedoch mit einem in Wagenfarbe gehaltenen nicht-tragenden Verkleidungsteil (18) überkleidet sind, welches lösbar und austauschbar mit dem jeweiligen Seitenschweller (17) verbunden ist.

7. Karosserie nach Anspruch 1,
**dadurch gekennzeichnet**,
daß die Seitenschweller (17), also die unterhalb der Seitentüren (12) verlaufenden Bodenlängsträger, auch bei geschlossenen Fahrzeugtüren (12) unmittelbar frei liegen, mit ihrer nach außen weisenden Oberfläche entsprechend dem gewünschten Oberflächenverlauf der Karosserie (1) geformt sind und - abgesehen von einer Lackierung - unmittelbar Karosserieoberfläche bilden.

8. Karosserie nach Anspruch 1,
**dadurch gekennzeichnet**,
daß in das offene Feld zwischen den Profilstäben (3) im Dachbereich unterschiedliche Dacheinsätze, zum Beispiel ein festes Dach (8) aus einem durchsichtigen oder aus einem undurchsichtigen Werkstoff oder ein Lamellendach oder ein Faltdach dichtend einsetzbar sind.

## Claims

1. Body (1) for a motor car, especially a small car, in which the load-bearing structure of the body (1) is formed as a "space-frame" structure, by a three-dimensional framework structure (2) composed of sectional bars (3) joined together by way of connecting nodes,
the areas between the sectional bars (3) in the floor region and in the side region behind the side doors being closed off by surface elements (4, 5) permanently integrated into the framework structure and connected in a sealing manner to the framework bars,
the open areas of the framework structure in the region of the windscreen (6) and of fixed side windows (7) behind the side doors (12) and in the region of the roof (8) being closed off respectively by window panes (6, 7) inserted in a sealing manner and by a roof (8) inserted in a sealing manner,
the open areas of the framework structure (2) in the front region being closed off by a nose module (9) which can be bolted on in a sealing manner, can be preassembled ready for operation and, on the right and left, also contains the front light units (10),
the nose module (9) being covered with a panelling component (11) which leaves gaps for the front light units (10), and
it being possible to close off the open areas of the framework structure (2) in the region of the side doors (12) and of a tailgate (13) by a side door (12) fitted in a sealing manner and a tailgate (13) respectively, which side doors (12) and tailgate (13) each have an external door leaf (15) or a gate outer wall limited to the region below the bottom edge (14) of the windows, characterized in that
at least those sectional bars (3) of the framework structure (2) which lie above the bottom edge (14) of the windows or at least that region of individual sectional bars (3) of the framework structure (2) which extends above the bottom edge (14) of the windows have their respective outward-facing flat side (16) exposed, are in each case shaped in this region to match the desired surface profile of the body (1) and apart from a paint finish directly form body surface area, in that
the panelling component (11) which covers the nose module (9) and leaves gaps for the front light units (10) is connected removably and replaceably to the nose module (9), in that
the external door leaves (15) and the gate outer wall belonging respectively to the side doors (12) and the tailgate (13) and being limited to the region below the bnottom edge (14) of the windows are likewise each connected removably and replaceably to the load-bearing door structure or gate structure, and in that
below the bottom edge (14) of the windows the framework structure (2) is covered with panelling components (18, 19) without a load-bearing function which are connected removably and replaceably to the framework structure (2) and, in this lower region, determine the shape of the body together with the external door leaves (15), the gate outer wall and the panelling component (11) of the nose module (9).

2. Body according to Claim 1, characterized in that the framework structure (2) is coated with a paint finish which requires different application methods from the paint finish of the panelling components (11, 15, 18, 19).

3. Body according to Claim 1, characterized in that - in contrast to the paint finish of the panelling components (11, 15, 18, 19) - the framework structure (2) is coated with an alternative paint finish.

4. Body according to Claim 1, characterized in that - in contrast to the paint finish of the panelling components (11, 15, 18, 19) - the framework structure (2) is coated with a paint finish with a textured surface and/or speckled colouring.

5. Body according to Claim 1, characterized in that the paint finish of the framework structure (2) is given a coarser surface texture and/or specks of colour than any surface defects and/or working marks on the unpainted sectional bars (3) of the framework structure (2).

6. Body according to Claim 1, characterized in that the side sills (17), i.e. the longitudinal floor members extending below the side doors (12), are not covered by the closed side doors (12), but are covered with a non-load-bearing panelling component (18), the colour of which is kept to that of the car and which is connected removably and replaceably to the respective side sill (17).

7. Body according to Claim 1, characterized in that the side sills (17), i.e. the longitudinal floor members extending below the side doors (12), are directly exposed even when the vehicle doors (12) are closed, have their outward-facing surface shaped to match the desired surface profile of the body (1) and - apart from a paint finish - directly form body surface area.

8. Body according to Claim 1, characterized in that different roof inserts, for example a hard roof (8) consisting of a transparent or an opaque material, or a multi-panel roof or a folding roof can be inserted in a sealing manner into the open area between the sectional bars (3) in the roof region.

## Revendications

1. Carrosserie (1) pour une voiture de tourisme, notamment une petite voiture, dans laquelle la structure porteuse de la carrosserie (1) est formée par une structure spatiale formant ossature (2) constituée par des barres profilées (3) réunies par l'intermédiaire de noeuds de liaison, sous la forme de ce qu'on appelle une structure space - frame, dans laquelle
• les espaces présents entre les barres profilées (3) sont fermés dans la zone du plancher et dans la partie latérale située derrière les portes latérales, par des éléments plats (4,5) qui sont intégrés d'une manière inamovible dans la structure formant ossature et sont raccordés de façon étanche aux barres de l'ossature,
• les espaces ouverts de la structure formant ossature sont fermés au niveau du pare-brise (6) ainsi que de fenêtres latérales fixes (7) en arrière des portes latérales (12) et dans la zone du toit (8), par des vitres de fenêtres (6,7) montées d'une manière étanche ou par un toit (8) monté de façon étanche,
• les espaces ouverts de la structure formant ossature (2) sont fermés dans la partie avant par un module avant (9) pouvant être vissé de façon étanche et pouvant être préassemblé à l'état prêt pour le fonctionnement et qui contient également à droite et à gauche les unités d'éclairage avant (10), le module avant (9) étant habillé par une partie de revêtement (11) qui laisse les unités d'éclairage avant (10) dégagées, et
• les espaces ouverts de la structure formant ossature (2) peuvent être fermés dans la zone des portes latérales (12) et d'un hayon arrière (13) respectivement par une polie latérale (12) montée de façon étanche ou par un hayon arrière (13), ces portes latérales (12) ou ce hayon arrière (13) comportant respectivement un panneau extérieur de porte (15) limité à la zone située au-dessous du bord inférieur (14) de la fenêtre, ou une paroi extérieure de hayon,
**caractérisée en ce que**
• au moins les barres profilées (3) de la structure formant ossature (2), qui s'étendent au-dessus du bord inférieur (14) de la fenêtre ou au moins la partie, qui s'étend au-dessus du bord inférieur (14) de la fenêtre, de barres profilées individuelles (3) de la structure formant ossature (2) sont dégagées respectivement au niveau de leur face plane (16) tournée vers l'extérieur, sont conformées dans cette zone, en étant respectivement adaptées au profil de surface désiré de la carrosserie (1) et forment directement, en dehors d'une peinture, la surface de la carrosserie, que la partie d'habillage (11), qui recouvre le module avant (9) et laisse les unités d'éclairage avant (10) dégagées, est reliée de façon amovible et interchangeable au module avant (9) et les panneaux extérieurs de portes (15), qui sont associés aux portes latérales (12) ou au hayon arrière (13) et sont limités à la zone située au-dessous du bord inférieur (14) de la fenêtre, ou la paroi extérieure du hayon sont également reliés respectivement de façon amovible et interchangeable à la structure porteuse de la porte ou du hayon et qu'au-dessous du bord inférieur de la fenêtre (14) la structure formant ossature (2) est habillée avec des éléments d'habillage (18,19) n'ayant aucune fonction de support et qui sont reliés de façon amovible et interchangeable à la structure formant ossature (2) et qui, dans cette partie inférieure, déterminent la forme de la carrosserie conjointement avec les panneaux extérieurs de porte (15), la paroi extérieure du hayon et l'élément d'habillage (11) du module avant (9).

2. Carrosserie selon la revendication 1, caractérisée en ce que la structure formant ossature (2) est recouverte d'une peinture qui nécessite un autre procédé d'application que celui de la peinture des éléments d'habillage (11,15,18,19).

3. Carrosserie selon la revendication 1, caractérisée en ce que la structure formant ossature (2) est recouverte d'une autre peinture - différente de la peinture des éléments d'habillage (11,15,18,19).

4. Carrosserie selon la revendication 1, caractérisée en ce que la structure formant ossature (2) est recouverte d'une peinture structurée superficiellement et/ou à couleur mouchetée.

5. Carrosserie selon la revendication 1, caractérisée en ce que la peinture de la structure formant ossature (2) est agencée de manière à avoir une structuration superficielle plus grossière et/ou un moucheté de couleur plus grossier que d'éventuels défauts de surface et/ou d'éventuelles traces d'usinage sur les barres profilées non peintes (3) de la structure formant ossature (2).

6. Carrosserie selon la revendication 1, caractérisée en ce que les bas de marche (17), c'est-à-dire les supports longitudinaux de plancher qui s'étendent au-dessous des portes latérales (12), ne sont pas recouverts par les portes latérales fermées (12), mais sont habillés avec un élément d'habillage (18) non porteur, qui est maintenu dans la couleur de la voiture et est relié, de façon amovible et interchangeable aux bas de marche latéraux respectifs (17).

7. Carrosserie selon la revendication 1, caractérisée en ce que les bas de marche (17), c'est-à-dire les supports longitudinaux de plancher qui s'étendent au-dessous des portes latérales (12), sont directement dégagés même lorsque les portes (12) du véhicule sont fermées, sont conformés de telle sorte que leur surface tournée vers l'extérieur est adaptée à la forme désirée de la surface de la carrosserie (1) et indépendamment d'une peinture - forment directement la surface de la carrosserie.

8. Carrosserie selon la revendication 1, caractérisée en ce que différents inserts de toit, par exemple un toit fixe (8) formé d'un matériau transparent ou d'un matériau opaque ou un toit à lamelles ou une capote pliante, peuvent être montés de façon étanche dans l'espace ouvert situé entre les barres profilées (13) dans la zone du toit.
